# EUROPEAN PATENT APPLICATION

(11) **EP 4 075 369 A2**
(43) Date of publication of application: **19.10.2022**
(21) Application number: 22187230.2
(22) Date of filing: 27.07.2022
(51) Int. Cl.: G06Q 30/06

(54) **METHOD AND APPARATUS FOR PROCESSING INFORMATION**

(30) Priority: 27.07.2021 CN 202110854007
(71) Applicant: Apollo Intelligent Connectivity (Beijing) Technology Co., Ltd., Beijing 100176 (CN)
(72) Inventor: WANG, Ya, Beijing, 100176 (CN); LI, Luoshanzhu, Beijing, 100176 (CN)
(74) Representative: Stöckeler, Ferdinand

(57) **Abstract**

A method and an apparatus for processing an information for a vehicle, a vehicle, a device, a storage medium and a program product are provided, relating to fields of intelligent transportation, Internet of Vehicles, image processing, voice technology, etc. The method for processing an information for a vehicle includes: determining a provider information associated with a target scene information in response to the target scene information being detected; determining at least one object information associated with the provider information based on the provider information; recommending the at least one object information; and performing a resource ownership transferring operation on a target object information among the at least one object information, in response to an operation instruction from a user for the target object information being received.

## Description

### TECHNICAL FIELD

The present disclosure relates to a field of computer technology, in particular, to fields of intelligent transportation, Internet of Vehicles, image processing, and voice technology, etc., and specifically to a method and an apparatus for processing an information for a vehicle, a vehicle, an electronic device, a medium and a program product.

### BACKGROUND

When a user drives a vehicle, the user usually passes through shopping malls, shops, and the like. If the user is interested in a shopping mall or a store, the user usually has to stop the vehicle and walk into the shopping mall or the store to purchase products.

### SUMMARY

The present disclosure provides a method and an apparatus for processing an information for a vehicle, a vehicle, an electronic device, a storage medium and a program product.

According to one aspect of the present disclosure, a method for processing an information for a vehicle is provided, including: determining a provider information associated with a target scene information in response to the target scene information being detected; determining at least one object information associated with the provider information based on the provider information; recommending the at least one object information; and performing a resource ownership transferring operation on a target object information among the at least one object information, in response to an operation instruction from a user for the target object information being received.

According to another aspect of the present disclosure, an apparatus for processing an information for a vehicle is provided, including: a first determining module configured to determine a provider information associated with a target scene information in response to the target scene information being detected; a second determining module configured to determine at least one object information associated with the provider information based on the provider information; a recommending module configured to recommend the at least one object information; and a transferring module configured to perform a resource ownership transferring operation on a target object information among the at least one object information, in response to an operation instruction from a user for the target object information being received.

According to another aspect of the present disclosure, a vehicle is provided, including: an image capturing device configured to capture at least one of an environment image and a user image; an augmented reality head up display configured to present a target scene information; an information interacting system configured to collect a provider information and an object information; a voice system configured to interact with a user by voice; and a controller, wherein the controller is in data connection with the image capturing device, the augmented reality head up display, the information interacting system and the voice system, and the controller is configured to perform the method for processing an information for a vehicle.

According to another aspect of the present disclosure, an electronic device is provided, including: at least one processor; and a memory communicatively connected with the at least one processor; wherein the memory stores instructions executable by the at least one processor, and the instructions, when executed by the at least one processor, cause the at least one processor to perform the method for processing an information for a vehicle.

According to another aspect of the present disclosure, a non-transitory computer-readable storage medium storing computer instructions is provided, wherein the computer instructions are configured to cause the computer to perform the method for processing an information for a vehicle.

According to another aspect of the present disclosure, a computer program product including a computer program is provided, wherein the computer program, when executed by a processor, implements the method for processing an information for a vehicle.

It should be understood that the content described in this section is not intended to identify key or important features of the embodiments of the present disclosure, nor is it intended to limit the scope of the present disclosure. Other features of the present disclosure will be easily understood through the following description.

### BRIEF DESCRIPTION OF THE DRAWINGS

The drawings are used to better understand the solutions, and do not constitute a limitation to the present disclosure. Wherein:
FIG. 1 schematically shows an application scene for a method and an apparatus for processing an information for a vehicle according to an embodiment of the present disclosure;
FIG. 2 schematically shows a flowchart of a method for processing an information for a vehicle according to an embodiment of the present disclosure;
FIG. 3 schematically shows a schematic diagram of a vehicle according to an embodiment of the present disclosure;
FIG. 4 schematically shows a block diagram of an apparatus for processing an information for a vehicle according to an embodiment of the present disclosure; and
FIG. 5 is a block diagram of an electronic device used to implement processing an information for a vehicle according to the embodiments of the present disclosure.

### DETAILED DESCRIPTION OF EMBODIMENTS

Hereinafter, the embodiments of the present disclosure will be described with reference to the drawings. It should be understood, however, that these descriptions are merely exemplary and are not intended to limit the scope of the present disclosure. In the following detailed description, for ease of interpretation, many specific details are set forth to provide a comprehensive understanding of the embodiments of the present disclosure. However, it is clear that one or more embodiments may also be implemented without these specific details. In addition, in the following description, descriptions of well-known structures and technologies are omitted to avoid unnecessarily obscuring the concepts of the present disclosure.

The terms used herein are for the purpose of describing specific embodiments only and are not intended to limit the present disclosure. The terms "comprising", "including", etc. used herein indicate the presence of the feature, step, operation and/or part, but do not exclude the presence or addition of one or more other features, steps, operations or parts.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.

In the case of using the expression similar to "at least one of A, B and C", it should be explained according to the meaning of the expression generally understood by those skilled in the art (for example, "a system having at least one of A, B and C" should include but not be limited to a system having only A, a system having only B, a system having only C, a system having A and B, a system having A and C, a system having B and C, and/or a system having A, B and C).

The embodiments of the present disclosure provide a method for processing an information for a vehicle is provided, including: determining a provider information associated with a target scene information in response to the target scene information being detected; determining at least one object information associated with the provider information based on the provider information recommending the at least one object information; and performing a resource ownership transferring operation on a target object information among the at least one object information, in response to an operation instruction from a user for the target object information being received.

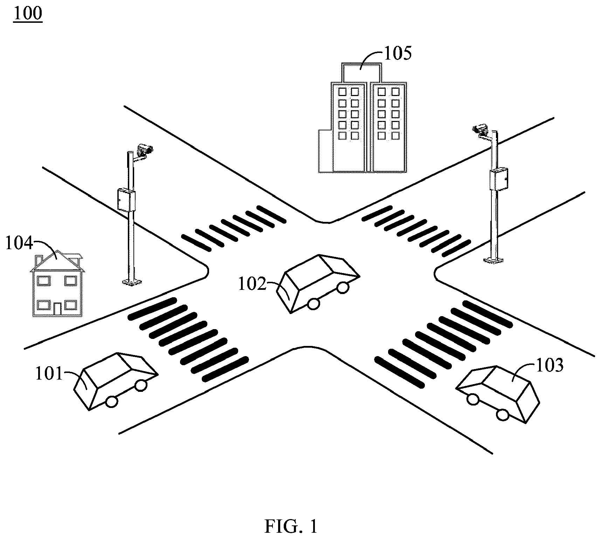

FIG. 1 schematically shows an application scene for a method and an apparatus for processing an information for a vehicle according to an embodiment of the present disclosure. It should be noted that FIG. 1 is only an example of an application scene to which the embodiments of the present disclosure may be applied, so as to help those skilled in the art to understand the technical content of the present disclosure, but it does not mean that the embodiments of the present disclosure are not applicable in other devices, systems, environments or scenes.

As shown in FIG. 1, the application scene 100 according to this embodiment may include vehicles 101, 102 and 103 and providers 104 and 105.

Exemplarily, the providers 104 and 105 include, for example, shopping malls, stores, etc., and the providers may provide products.

The vehicles 101, 102 and 103 may provide the function of online shopping through an Internet of Vehicles system. When users driving the vehicles 101, 102 and 103 are interested in shopping malls or stores on the road, the vehicles 101, 102 and 103 may recommend the products of the shopping malls or the stores for the users. For example, the vehicles 101, 102, and 103 have a system for interacting between the vehicle and the external object, and the system includes, for example, a V2X (Vehicle to Everything) system. Through this system, the vehicle may acquire an external environment in real time, such as an external building information, a shopping mall information, a store information, and a product activity information, etc. In addition, the vehicles 101, 102 and 103 may also place an order for a product according to a requirement of a user, thereby implementing the intelligent shopping function of the vehicles.

It should be noted that the method for processing an information for a vehicle provided by the embodiments of the present disclosure may be executed by the vehicles 101, 102 and 103. Correspondingly, the apparatus for processing an information for a vehicle provided by the embodiments of the present disclosure may be provided in the vehicles 101, 102 and 103.

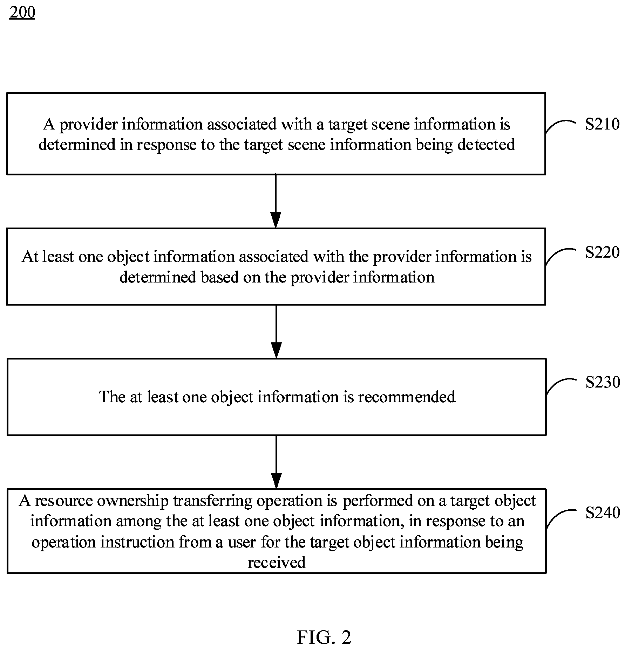

The embodiments of the present disclosure provide a method for processing an information for a vehicle. The method for processing an information for a vehicle according to the exemplary embodiments of the present disclosure is described below with reference to FIG. 2 in conjunction with the application scene of FIG. 1.

FIG. 2 schematically shows a flowchart of a method for processing an information for a vehicle according to an embodiment of the present disclosure.

As shown in FIG. 2, the method 200 for processing an information for a vehicle according to the embodiments of the present disclosure may include, for example, operations S210 to S240.

In operation S210, a provider information associated with a target scene information is determined in response to the target scene information being detected.

In operation S220, at least one object information associated with the provider information is determined based on the provider information.

In operation S230, the at least one object information is recommended.

In operation S240, a resource ownership transferring operation is performed on a target object information among the at least one object information, in response to an operation instruction from a user for the target object information being received.

Exemplarily, the vehicle may detect the target scene information during driving of the vehicle. For example, the target scene information is determined by detecting a surrounding environment information during driving or detecting a relevant information of the user in the vehicle. The target scene information is associated with, for example, the provider information. For example, after the target scene information is detected, the provider information associated with the target scene information may be determined based on the target scene information. The provider includes, for example, a shopping mall, a store or the like. The provider provides the user with an object, and the object includes a product. The provider information includes, for example, the name of the shopping mall and the name of the store.

When detecting the target scene information, an image of the surrounding environment or an image of the user in the vehicle may be captured by an image capturing device, and image recognition is applied to the image to determine whether a current scene is the target scene.

When the current scene is determined as the target scene, the provider information associated with the target scene information is determined. Then, at least one object information provided by the provider is determined based on the provider information, and the at least one object information is recommend to the user by the vehicle, so that the user may perform an operation on the at least one object information. The operation includes a purchase operation or an ordering operation.

The user may perform an operation on the target object information among the recommended at least one object information. After the vehicle receives the operation instruction from the user, the resource ownership transferring operation may be performed on the target object information. The operation instruction includes a purchase operation instruction or an ordering operation instruction, and performing the resource ownership transferring operation on the target object information includes purchasing the target object or ordering for the target object, etc.

According to the embodiments of the present disclosure, the vehicle may detect the target scene information in real time during driving. After the target scene information is detected, the provider information associated with the target scene information may be determined based on the target scene information so as to recommend the object provided by the provider to the user, and the resource ownership transferring operation is performed based on the instruction from the user. It may be understood that, through the embodiments of the present disclosure, the intelligent shopping function of the vehicle is implemented, which allows the user to purchase a product of interest on the road at any time during the driving process, and improves the driving experience and the shopping experience of the user.

In an example, the target scene information includes an information of a scene containing a crowd. The vehicle at least includes an image capturing device, an augmented reality head up display (AR-HUD), a voice system, and a system (V2X system) for interacting between the vehicle and the external object. During the driving process, the vehicle may capture the image of the surrounding environment in real time through the image capturing device, and determine whether there is a crowd through image recognition.

When the information of the scene containing the crowd is detected by the vehicle, a scene prompt information is generated. For example, the scene prompt information may be displayed on the windshield of the vehicle by using the augmented reality head up display, so as to prompt the user.

When the user knows that there is a gathered crowd around, the user may interact with the voice system of the vehicle through voice. For example, the user may initiate a query information inquiring about an event information associated with the information of the scene containing the crowd. For example, the query information may be "What is the crowd in front doing?"

After the vehicle receives the query information about the information of the scene containing the crowd, the provider information associated with the target scene information may be determined, so as to present the provider information to the user. For example, the vehicle obtains the information of the provider (store) where the crowd gathers through the system (V2X system) for interacting between the vehicle and the external object, and presents the store information to the user. For example, when the vehicle determines that the store associated with the information of the scene containing the crowd is a newly opened milk tea shop, the vehicle may provide a feedback of "This is a newly opened milk tea shop, everyone is queuing up to buy, would you like to know more?" to the user through the voice system.

Next, the user may initiate an inquiry instruction to the vehicle, where the inquiry instruction is used to inquire the object information associated with the provider (store) information, for example, the inquiry instruction includes "Please introduce the products of the newly opened milk tea shop". After the vehicle receives the inquiry instruction from the user, the vehicle may recommend at least one object (product) information to the user.

The user may select a desired target object from the recommended at least one object. For example, the user may initiate a voice instruction "I want two cups of the top-selling milk tea, please deliver them home". After receiving the operation instruction from the user, the vehicle may perform the resource ownership transferring operation on the target object information, for example, purchase two cups of the top-selling milk tea with a requirement of delivery. After the order is placed, the vehicle voice system may provide a feedback of "OK, the order is paced, and it is estimated to arrive within 40 minutes".

After the vehicle performs the resource ownership transferring operation on the target object information, the vehicle may present the logistics status information of the target object information in real time. For example, the delivery information is displayed on the screen page or the windshield of the vehicle. The delivery information includes, for example, "in stock", "delivering", and "delivery completed". Additionally, the delivery information may be represented by an icon.

According to the embodiments of the present disclosure, the vehicle may detect the surrounding crowd in real time during driving, so as to recommend a popular store for the user. When the user is interested in the recommended store, the vehicle may automatically place an order for the user based on the instruction from the user, which improves the driving experience of the user and implements the intelligent shopping function of the vehicle.

In another example, the target scene information includes, for example, an information of a scene in which the user is gazing. For example, during driving, the vehicle captures a user image in the vehicle in real time through the image capturing device. The user image includes a user face image. The user includes, for example, a user in the driver seat or a user in the passenger seat.

Exemplarily, the user image is captured when an event that the vehicle is waiting for a traffic light is detected. A sight of the user is identified from the user image. Then, it is determined whether the information of the scene in which the user is gazing is detected based on the sight of the user.

When it is detected that the user in the vehicle is gazing outward, it means that the user is interested in the information gazed by the user. At this time, the image capturing device captures an environment image based on the sight of the user. The environment image includes the information that the user is interested in. Then, the image recognition is performed on the environmental image to determine an information of a tag gazed by the user. The information of the tag is used to indicate the provider information. For example, when the user is gazing at a doorplate of a certain store or supermarket, the information of the tag represents, for example, the doorplate of the store or supermarket. The doorplate indicates the provider information. The vehicle may display or mark the information of the tag on the windshield of the vehicle by using the augmented reality head up display.

Next, the provider information associated with the target scene information is determined based on the information of the tag. For example, the store or supermarket focused by the user is determined, and the products or related information provided by the store or supermarket are presented to the user. For example, the user may initiate the inquiry instruction to the vehicle, and the vehicle presents the relevant product information of the store or supermarket based on the inquiry instruction. The inquiry instruction includes e.g. "Recommend the products in this shop or supermarket". Alternatively, the vehicle may initiatively present the relevant product information. The content presented by the vehicle includes, for example, "fresh milk supply, promotion of tobacco and alcohol, home delivery", etc.. The content to be presented may be displayed on the windshield of the vehicle through the augmented reality head up display.

When the user is interested in a product, the user may select the desired product. For example, the user may initiate a voice instruction "Purchase 4 bottles of fresh milk of XX brand and deliver them to home". After receiving the operation instruction of the user, the vehicle may perform the resource ownership transfer operation on the target object information, for example, purchase 4 bottles of fresh milk of XX brand with a requirement of delivery. After the order is placed, the vehicle voice system may provide a feedback of "Ok, the order is paced, and it is estimated to arrive within 1 hour".

After the vehicle performs the resource ownership transfer operation on the target object information, the vehicle may present the logistics status information of the target object information in real time. For example, the delivery icon is displayed on the windshield of the vehicle, and the logistics status is updated in real time according to the actual logistics situation. Alternately, in the process of placing an order, the relevant information and logistics information may be displayed on the windshield. When it is detected that the slight of the user has left the doorplate of the store, the logistics information may be folded into an icon format and displayed on the screen page of the vehicle, and an icon state may be updated on screen page. The icon state includes, for example, "in stock", "delivering", "delivery completed", etc.

In the voice interaction between the voice system and the user, when the user is speaking, the voice interacting system may render a state of listening carefully. After the order is placed, the voice system may render a happy state or a processing completion state, thereby improving the user experience.

According to the embodiments of the present disclosure, the vehicle may detect the slight of the user in real time during driving. When the user is gazing at a certain surrounding store, it means that the user is interested in the store. The vehicle may automatically place an order for the user based on the instruction from the user, which improves the driving experience of the user and implements the intelligent shopping function of the vehicle.

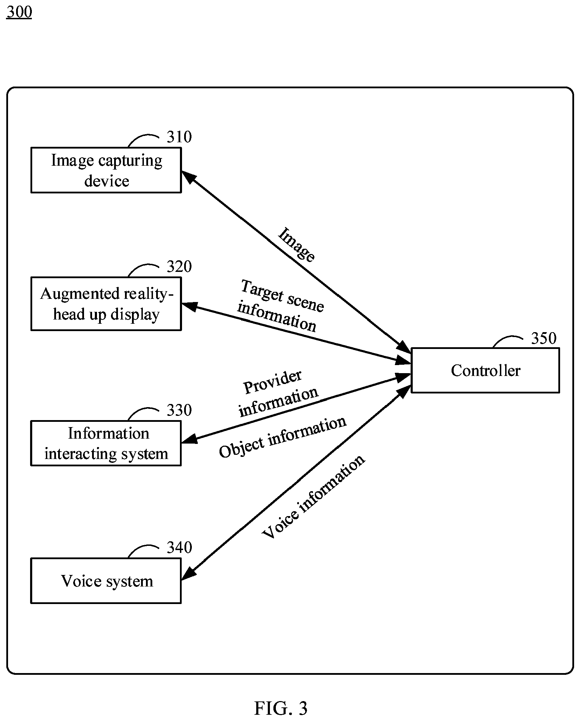

FIG. 3 schematically shows a schematic diagram of a vehicle according to an embodiment of the present disclosure.

As shown in FIG. 3, the vehicle 300 in the embodiments of the present disclosure may include, for example, an image capturing device 310, an augmented reality head up display 320, an information interacting system 330, a voice system 340 and a controller 350. The controller 350 is, for example, in data connection with the image capturing device 310, the augmented reality head up display 320, the information interacting system 330 and the voice system 340. The image capturing device 310 may include at least one camera. The information interacting system 330 is, for example, the above-mentioned system (V2X system) for interacting between the vehicle and the external object. For example, the information interacting system 330 may include a touch screen for presenting and receiving information through a user interaction interface. The voice system 340 may include a microphone for receiving voice information and a speaker for outputting voice information.

Exemplarily, the image capturing device 310 is used to capture an image which includes, for example, an environment image around the vehicle or a user image in the vehicle. The captured image is transmitted to the controller 350, and the controller 350 identifies a target scene information from the image.

The augmented reality head up display 320 is, for example, used to present the target scene information, such as presenting an information of a scene containing a crowd and an information of a store gazed by the user on the windshield of the vehicle. For example, the controller 350 may transmit the target scene information to the augmented reality head up display 320 for presentation.

Exemplarily, the information interacting system 330 is used to collect a plurality of provider information and an object information for each provider information, and transmit the plurality of collected provider information and the object information to the controller 350. After determining that the target scene information is detected, the controller 350 may determine the provider information associated with the target scene information from the plurality of provider information, and determine the object information associated with the provider information.

The voice system 340 is used to interact with a user by voice. The controller 350 may present the voice information to be presented to the user through the voice system 340, or receive the voice information of the user through the voice system 340.

The controller 350 is used to process the relevant data from the image capturing device 310, the augmented reality head up display 320, the information interacting system 330 and the voice system 340, and perform a resource ownership transfer operation based on processing results.

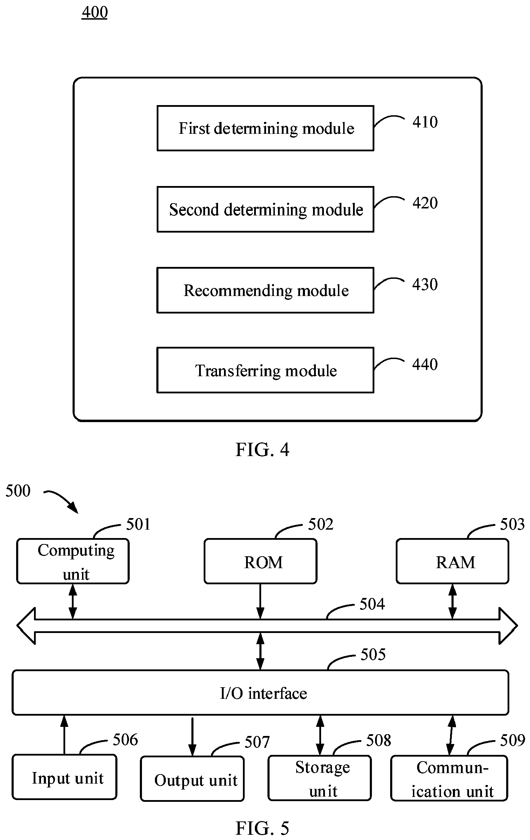

FIG. 4 schematically shows a block diagram of an apparatus for processing an information for a vehicle according to an embodiment of the present disclosure.

As shown in FIG. 4, the apparatus 400 for processing an information for a vehicle according to the embodiments of the present disclosure includes, for example, a first determining module 410, a second determining module 420, a recommending module 430, and a transferring module 440.

The first determining module 410 is used to determine a provider information associated with a target scene information in response to the target scene information being detected. According to the embodiments of the present disclosure, the first determining module 410 may, for example, perform the operation S210 described above with reference to FIG. 2, which will not be repeated here.

The second determining module 420 is used to determine at least one object information associated with the provider information based on the provider information. According to the embodiments of the present disclosure, the second determining module 420 may, for example, perform the operation S220 described above with reference to FIG. 2, which will not be repeated here.

The recommending module 430 is used to recommend the at least one object information. According to the embodiments of the present disclosure, the recommending module 430 may, for example, perform the operation S230 described above with reference to FIG. 2, which will not be repeated here.

The transferring module 440 is used to perform a resource ownership transferring operation on a target object information among the at least one object information, in response to an operation instruction from a user for the target object information being received. According to the embodiments of the present disclosure, the transferring module 440 may, for example, perform the operation S240 described above with reference to FIG. 2, which will not be repeated here.

According to the embodiments of the present disclosure, the target scene information includes an information of a scene containing a crowd; and the first determining module includes a generating sub-module and a first determining sub-module. The generating sub-module is used to generate a scene prompt information in response to the information of the scene containing the crowd being detected. The first determining sub-module is used to determine the provider information associated with the target scene information in response to a query information from the user for the information of the scene containing the crowd being received, so as to present the provider information to the user. The query information is used to inquire an event information associated with the information of the scene containing the crowd.

According to the embodiments of the present disclosure, the target scene information includes an information of a scene in which the user is gazing; and the first determining module includes an acquiring sub-module, an identifying sub-module and a second determining sub-module. The acquiring sub-module is used to acquire an environment image based on a sight of the user in response to the information of the scene in which the user is gazing being detected. The identifying sub-module is used to identify an information of a tag gazed by the user from the environment image, wherein the information of the tag is used to indicate a provider information. The second determining sub-module is used to determine the provider information associated with the target scene information based on the information of the tag.

According to the embodiments of the present disclosure, the apparatus 400 further includes a capturing module, a third determining module and a fourth determining module. The capturing module is used to capture a user image in response to an event that the vehicle is waiting for a traffic light being detected. The third determining module is used to identify the sight of the user from the user image. The fourth determining module is used to determine whether the information of the scene in which the user is gazing is detected based on the sight of the user.

According to the embodiments of the present disclosure, the recommending module is further used to recommend the at least one object information to the user in response to an inquiry instruction from the user being received, wherein the inquiry instruction is used to inquire the object information associated with the provider information.

According to the embodiments of the present disclosure, the apparatus 400 further includes: a presenting module used to present a logistics state information of the target object information in response to the resource ownership transfer operation being performed on the target object information.

Collecting, storing, using, processing, transmitting, providing, and disclosing etc. of the personal information of the user involved in the present disclosure all comply with the relevant laws and regulations, are protected by essential security measures, and do not violate the public order and morals. According to the present disclosure, personal information of the user is acquired or collected after such acquirement or collection is authorized or permitted by the user.

According to embodiments of the present disclosure, the present disclosure also provides an electronic device, a readable storage medium, and a computer program product.

FIG. 5 is a block diagram of an electronic device used to implement processing an information for a vehicle according to the embodiments of the present disclosure.

FIG. 5 shows a schematic block diagram of an example electronic device 500 used to implement the embodiments of the present disclosure. The electronic device is intended to represent various forms of digital computers, such as laptop computers, desktop computers, workstations, personal digital assistants, servers, blade servers, mainframe computers and other suitable computers. The electronic device may also represent various forms of mobile devices, such as personal digital processing, cellular phones, smart phones, wearable devices and other similar computing devices. In some embodiments, the electronic device 500 may be included in the vehicle as described above, for example may be implemented as the controller of the vehicle. The components shown herein, their connections and relationships, and their functions are merely examples, and are not intended to limit the implementation of the present disclosure described and/or required herein.

As shown in FIG. 5, the device 500 includes a computing unit 501, which may execute various appropriate actions and processing according to a computer program stored in a read only memory (ROM) 502 or a computer program loaded from a storage unit 508 into a random access memory (RAM) 503. Various programs and data required for the operation of the device 500 may also be stored in the RAM 503. The computing unit 501, the ROM 502 and the RAM 503 are connected to each other through a bus 504. An input/output (I/O) interface 505 is also connected to the bus 504.

The I/O interface 505 is connected to a plurality of components of the device 500, including: an input unit 506, such as a keyboard, a mouse, etc.; an output unit 507, such as various types of displays, speakers, etc.; a storage unit 508, such as a magnetic disk, an optical disk, etc.; and a communication unit 509, such as a network card, a modem, a wireless communication transceiver, etc. The communication unit 509 allows the device 500 to exchange information/data with other devices through the computer network such as the Internet and/or various telecommunication networks.

The computing unit 501 may be various general-purpose and/or special-purpose processing components with processing and computing capabilities. Some examples of computing unit 501 include, but are not limited to, central processing unit (CPU), graphics processing unit (GPU), various dedicated artificial intelligence (AI) computing chips, various processors that run machine learning model algorithms, digital signal processing DSP and any appropriate processor, controller, microcontroller, etc. The computing unit 501 executes the various methods and processes described above, such as the method for processing an information for a vehicle. For example, in some embodiments, the method for processing an information for a vehicle may be implemented as computer software programs, which are tangibly contained in the machine-readable medium, such as the storage unit 508. In some embodiments, part or all of the computer program may be loaded and/or installed on the device 500 via the ROM 502 and/or the communication unit 509. When the computer program is loaded into the RAM 503 and executed by the computing unit 501, one or more steps of the method for processing an information for a vehicle described above may be executed. Alternatively, in other embodiments, the computing unit 501 may be used to execute the method for processing an information for a vehicle in any other suitable manner (for example, by means of firmware).

Various implementations of the systems and technologies described in the present disclosure may be implemented in digital electronic circuit systems, integrated circuit systems, field programmable gate arrays (FPGA), application specific integrated circuits (ASIC), application-specific standard products (ASSP), system-on-chip SOC, load programmable logic device (CPLD), computer hardware, firmware, software and/or their combination. The various implementations may include being implemented in one or more computer programs. The one or more computer programs may be executed and/or interpreted on a programmable system including at least one programmable processor. The programmable processor may be a dedicated or general programmable processor, which may receive data and instructions from a storage system, at least one input device and at least one output device, and transmit data and instructions to the storage system, the at least one input device and the at least one output device.

The program code used to implement the method of the present disclosure may be written in any combination of one or more programming languages. The program codes may be provided to the processors or controllers of general-purpose computers, special-purpose computers or other programmable data processing devices, so that the program code enables the functions/operations specific in the flowcharts and/or block diagrams to be implemented when the program code executed by a processor or controller. The program code may be executed entirely on the machine, partly executed on the machine, partly executed on the machine and partly executed on the remote machine as an independent software package, or entirely executed on the remote machine or server.

In the context of the present disclosure, the machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage media would include electrical connections based on one or more wires, portable computer disks, hard disks, random access memory (RAM), read only memory (ROM), erasable programmable read only memory (EPROM or flash memory), optical fiber, portable compact disk read only memory (CD-ROM), optical storage device, magnetic storage device or any suitable combination of the above-mentioned content.

In order to provide interaction with users, the systems and techniques described here may be implemented on a computer, the computer includes: a display device (for example, a CRT (cathode ray tube) or LCD (liquid crystal display) monitor) for displaying information to the user; and a keyboard and a pointing device (for example, a mouse or trackball). The user may provide input to the computer through the keyboard and the pointing device. Other types of devices may also be used to provide interaction with users. For example, the feedback provided to the user may be any form of sensory feedback (for example, visual feedback, auditory feedback or tactile feedback); and any form (including sound input, voice input, or tactile input) may be used to receive input from the user.

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation of the system and technology described herein), or in a computing system including any combination of such back-end components, middleware components or front-end components. The components of the system may be connected to each other through any form or medium of digital data communication (for example, a communication network). Examples of communication networks include: local area network (LAN), wide area network (WAN) and the Internet.

The computer system may include a client and a server. The client and the server are generally far away from each other and usually interact through the communication network. The relationship between the client and the server is generated by computer programs that run on the respective computers and have a client-server relationship with each other. The server may be a cloud server, a server of a distributed system, or a server combined with a block chain.

It should be understood that the various forms of processes shown above may be used to reorder, add or delete steps. For example, the steps described in the present disclosure may be executed in parallel, sequentially or in a different order, as long as the desired result of the present disclosure may be achieved, which is not limited herein.

The above-mentioned specific implementations do not constitute a limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method (200) for processing an information for a vehicle, comprising:
determining (S210) a provider information associated with a target scene information in response to the target scene information being detected;
determining (S220) at least one object information associated with the provider information based on the provider information;
recommending (S230) the at least one object information; and
performing (S240) a resource ownership transferring operation on a target object information among the at least one object information, in response to an operation instruction from a user for the target object information being received.

2. The method according to claim 1, wherein the target scene information comprises an information of a scene containing a crowd; and the determining a provider information associated with a target scene information in response to the target scene information being detected comprises:
generating a scene prompt information in response to the information of the scene containing the crowd being detected; and
determining the provider information associated with the target scene information in response to a query information from the user for the information of the scene containing the crowd being received, so as to present the provider information to the user,
wherein the query information is configured to inquire an event information associated with the information of the scene containing the crowd.

3. The method according to claim 1, wherein the target scene information comprises an information of a scene in which the user is gazing; and the determining a provider information associated with a target scene information in response to the target scene information being detected comprises:
acquiring an environment image based on a sight of the user in response to the information of the scene in which the user is gazing being detected;
identifying an information of a tag gazed by the user from the environment image, wherein the information of the tag is configured to indicate a provider information; and
determining the provider information associated with the target scene information based on the information of the tag.

4. The method according to claim 3, further comprising:
capturing a user image in response to an event that the vehicle is waiting for a traffic light being detected;
identifying the sight of the user from the user image; and
determining whether the information of the scene in which the user is gazing is detected based on the sight of the user.

5. The method according to any one of claims 1 to 4, wherein the recommending the at least one object information comprises:
recommending the at least one object information to the user in response to an inquiry instruction from the user being received,
wherein the inquiry instruction is configured to inquire the object information associated with the provider information.

6. The method according to any one of claims 1 to 5, further comprising:
presenting a logistics state information of the target object information in response to the resource ownership transfer operation being performed on the target object information.

7. An apparatus (400) for processing an information for a vehicle, comprising:
a first determining module (410) configured to determine a provider information associated with a target scene information in response to the target scene information being detected;
a second determining module (420) configured to determine at least one object information associated with the provider information based on the provider information;
a recommending module (430) configured to recommend the at least one object information; and
a transferring module (440) configured to perform a resource ownership transferring operation on a target object information among the at least one object information, in response to an operation instruction from a user for the target object information being received.

8. The apparatus according to claim 7, wherein the target scene information comprises an information of a scene containing a crowd; and the first determining module comprises:
a generating sub-module configured to generate a scene prompt information in response to the information of the scene containing the crowd being detected; and
a first determining sub-module configured to determine the provider information associated with the target scene information in response to a query information from the user for the information of the scene containing the crowd being received, so as to present the provider information to the user,
wherein the query information is configured to inquire an event information associated with the information of the scene containing the crowd.

9. The apparatus according to claim 7, wherein the target scene information comprises an information of a scene in which the user is gazing; and the first determining module comprises:
an acquiring sub-module configured to acquire an environment image based on a sight of the user in response to the information of the scene in which the user is gazing being detected;
an identifying sub-module configured to identify an information of a tag gazed by the user from the environment image, wherein the information of the tag is configured to indicate a provider information; and
a second determining sub-module configured to determine the provider information associated with the target scene information based on the information of the tag.

10. The apparatus according to claim 9, further comprising:
a capturing module configured to capture a user image in response to an event that the vehicle is waiting for a traffic light being detected;
a third determining module configured to identify the sight of the user from the user image; and
a fourth determining module configured to determine whether the information of the scene in which the user is gazing is detected based on the sight of the user.

11. The apparatus according to any one of claims 7 to 10, wherein the recommending module is further configured to: recommend the at least one object information to the user in response to an inquiry instruction from the user being received, wherein the inquiry instruction is configured to inquire the object information associated with the provider information;
wherein the apparatus further comprising: a presenting module configured to present a logistics state information of the target object information in response to the resource ownership transfer operation being performed on the target object information.

12. A vehicle (300), comprising:
an image capturing device (310) configured to capture at least one of an environment image and a user image;
an augmented reality head up display (320) configured to present a target scene information;
an information interacting system (330) configured to collect a provider information and an object information;
a voice system (340) configured to interact with a user by voice; and
a controller (350), wherein the controller (350) is in data connection with the image capturing device (310), the augmented reality head up display (320), the information interacting system (330) and the voice system (340), and the controller (350) is configured to perform the method according to any one of claims 1 to 6.

13. An electronic device (500), comprising:
at least one processor (501); and
a memory (508) communicatively connected with the at least one processor (501);
wherein the memory (508) stores instructions executable by the at least one processor (501), and the instructions, when executed by the at least one processor (501), cause the at least one processor (501) to perform the method of any one of claims 1 to 6.

14. A non-transitory computer-readable storage medium storing computer instructions, wherein the computer instructions are configured to cause the computer to perform the method of any one of claims 1 to 6.

15. A computer program product comprising a computer program, wherein the computer program, when executed by a processor, implements the method of any one of claims 1 to 6.
